# EUROPEAN PATENT APPLICATION

(11) **EP 4 570 565 A1**
(43) Date of publication of application: **18.06.2025**
(21) Application number: 23872883.6
(22) Date of filing: 14.09.2023
(51) Int. Cl.: B60L 3/00, B60L 58/20, B60L 53/20, B60R 16/033, B60R 16/023, B60L 1/00

(54) **VEHICLE THAT CAN BE EMERGENCY-STARTED, AND OPERATING METHOD THEREFOR**

(30) Priority: 27.09.2022 KR 20220122900
(71) Applicant: LG Energy Solution, Ltd., Seoul 07335 (KR)
(72) Inventor: KIM, Jun Yeob, Daejeon 34122 (KR)
(74) Representative: Goddar, Heinz J.
(86) International application number: PCT/KR2023/013819
(87) International publication number: WO 2024/071764

(57) **Abstract**

A vehicle according to the present disclosure includes a first battery configured to store power for driving the vehicle, a second battery configured to store power for an operation of a vehicle controller configured to control at least one electronic device of the vehicle, a first converter configured to convert power output from the first battery, supply the power output to the second battery and use the second battery as an operating power source, a second converter configured to convert the power output from the first battery, supply the power output to the second battery and use the first battery as an operating power source, and an emergency controller configured to control connection between the first battery and the second battery.

## Description

### [TECHNICAL FIELD]

### CROSS-REFERENCE TO RELATED APPLICATION

This application claims priority to and the benefit of Korean Patent Application No. 10-2022-0122900 filed in the Korean Intellectual Property Office on September 27, 2022, the entire contents of which are incorporated herein by reference.

### TECHNICAL FIELD

Embodiments disclosed herein relate to a vehicle capable of emergency start even when a battery in the vehicle is discharged, and an operating method of the vehicle.

### [BACKGROUND ART]

Recently, research and development of secondary batteries have been actively performed. Secondary batteries, which are chargeable/dischargeable batteries, may include all of conventional nickel (Ni)/cadmium (Cd) batteries, Ni/metal hydride (MH) batteries, etc., and recent lithium-ion batteries. A lithium-ion battery has a much higher energy density than those of the conventional Ni/Cd batteries, Ni/MH batteries, etc. Moreover, the lithium-ion battery may be manufactured to be small and lightweight, such that the lithium-ion battery has been used as a power source of mobile devices, and recently, a use range thereof has been extended to power sources for electric vehicles, attracting attention as next-generation energy storage media.

Various electronic devices mounted on an electric vehicle are supplied with power from a dedicated battery, but power may not be supplied to the electronic devices in a situation where the dedicated battery is discharged, resulting in a problem that the electric vehicle fails to start.

### [DISCLOSURE]

### [TECHNICAL PROBLEM]

Embodiments disclosed herein aim to provide a vehicle capable of emergency start even in a situation where a battery that supplies power for start is discharged, and an operating method of the vehicle.

Technical problems of the embodiments disclosed herein are not limited to the above-described technical problems, and other unmentioned technical problems would be clearly understood by one of ordinary skill in the art from the following description.

### [TECHNICAL SOLUTION]

A vehicle according to an embodiment of the present disclosure includes a first battery configured to store power for driving the vehicle, a second battery configured to store power for an operation of a vehicle controller configured to control at least one electronic device of the vehicle, a first converter configured to convert power output from the first battery, supply the converted power to the second battery and use the second battery as an operating power source, a second converter configured to convert the power output from the first battery, supply the converted power to the second battery and use the first battery as an operating power source, and an emergency controller configured to control connection between the first battery and the second battery.

According to an embodiment, the emergency controller may be further configured to use the first battery as an operating power source.

According to an embodiment, the vehicle may further include a user switch configured to generate an emergency charging signal according to an input of a user.

According to an embodiment, the emergency controller may be further configured to connect the first battery to the second converter to charge the second battery with the power of the first battery, upon receiving the emergency charging signal.

According to an embodiment, the user switch may be located inside a motor room of the vehicle.

According to an embodiment, the emergency controller may be further configured to collect state data regarding the second battery.

According to an embodiment, the emergency controller may be further configured to determine, based on the state data regarding the second battery, whether charging of the second battery is required.

According to an embodiment, the emergency controller may be further configured to determine that charging of the second battery is required, when an output voltage of the second battery is kept at a predetermined voltage level or less for a predetermined time.

According to an embodiment, a voltage of the power stored in the first battery may be higher than a voltage of the power stored in the second battery.

According to an embodiment, the voltage of the power stored in the second battery may be 12 V.

According to an embodiment, the vehicle controller may include a vehicle control unit (VCU) configured to control start of the vehicle.

According to an embodiment, the VCU may be further configured to be supplied with the power from the second battery to control an operation of the first converter.

An operating method of a vehicle according to an embodiment of the present disclosure includes generating an emergency charging signal according to an input of a user through a user switch, charging, with power of a first battery that stores the power for driving the vehicle, a second battery that stores power of a voltage lower than a voltage of the power of the first battery, and supplying, by the second battery, the power to a vehicle controller that controls at least one electronic device of the vehicle.

An operating method of a vehicle according to another embodiment of the present disclosure includes collecting state data regarding a second battery that stores power of a voltage lower than a voltage of the power of a first battery that stores power for driving the vehicle, determining, based on the state data regarding the second battery, whether charging of the second battery is required, charging the second battery with the power of the first battery, when charging of the second battery is required, and supplying, by the second battery, the power to a vehicle controller that controls at least one electronic device of the vehicle.

### [ADVANTAGEOUS EFFECTS]

With a vehicle capable of emergency start and an operating method of the vehicle according to an embodiment disclosed herein, the emergency start is enabled even in a situation where a low-voltage battery is discharged or highly likely to be discharged, thereby improving user convenience.

Moreover, various effects recognized directly or indirectly from the disclosure may be provided.

### [DESCRIPTION OF DRAWINGS]

FIG. 1 is a block diagram of a vehicle according to an embodiment of the present disclosure.
FIG. 2 is a flowchart illustrating an operating method of a vehicle in a discharged state of an LV battery, according to an embodiment of the present disclosure.
FIG. 3 is a flowchart illustrating an operating method of a vehicle when an LV battery is likely to be discharged, according to another embodiment of the present disclosure.
FIG. 4 is a block diagram showing a hardware configuration of a computing system for performing an operating method of a system, according to an embodiment of the present disclosure.

### [MODE FOR INVENTION]

Hereinafter, embodiments disclosed in this document will be described in detail with reference to the exemplary drawings. In adding reference numerals to components of each drawing, it should be noted that the same components are given the same reference numerals even though they are indicated in different drawings. In addition, in describing the embodiments disclosed in this document, when it is determined that a detailed description of a related known configuration or function interferes with the understanding of an embodiment disclosed in this document, the detailed description thereof will be omitted.

To describe a component of an embodiment disclosed herein, terms such as first, second, A, B, (a), (b), etc., may be used. These terms are used merely for distinguishing one component from another component and do not limit the essence, sequence, order, etc., of the component. The terms used herein, including technical and scientific terms, have the same meanings as terms that are generally understood by those skilled in the art, as long as the terms are not differently defined. Generally, the terms defined in a generally used dictionary should be interpreted as having the same meanings as the contextual meanings of the relevant technology and should not be interpreted as having ideal or exaggerated meanings unless they are clearly defined in the present application.

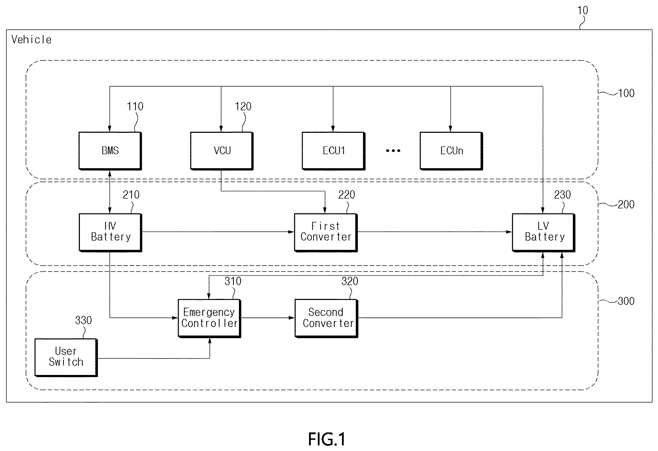

FIG. 1 is a block diagram of a vehicle according to an embodiment of the present disclosure.

Referring to FIG. 1, a vehicle 10 according to an embodiment according to the present disclosure may include a vehicle controller 100, a main power unit 200, and an emergency power unit 300.

The vehicle 10 may be an electric vehicle (EV) supplied with a driving force from a battery that stores power, but the scope of the present disclosure may not be limited thereto and the technical spirit of the present disclosure may be applied to electric transportation means (e.g., electric scooters, etc.) other than the vehicle 10.

The vehicle controller 100 may control a plurality of electric and electronic devices mounted on the vehicle 10. The vehicle controller 100 may include a battery management system (BMS) 110, a vehicle control unit (VCU) 120, and first to n^{th} electronic control units (ECUs) ECU 1 to ECUn (n is an integer of 2 or greater). Components of the vehicle controller 100 may communicate with each other through a vehicle network. Herein, the vehicle network may be a controller area network (CAN) where components connected in parallel are capable of communicating with each other without a host, but the scope of the present disclosure is not limited thereto.

The BMS 110 may control operations of a battery (i.e., a high-voltage (HV) battery) that stores power required for driving the vehicle 10. The BMS 110 may control charging and/or discharging of an HV battery 210, and store or transmit, to an outside (e.g., a management server), battery state data including at least one of data obtained by sensing a state of the HV battery 210 (e.g., voltage, current, resistance, temperature, etc., of the battery) and data generated by processing the obtained data (e.g., a state of charge (SoC), a state of health (SoH), etc.).

The VCU 120, which is the highest-level controller of the vehicle 10, may communicate with other controllers (e.g., 110, ECU1 to ECUn) included in the vehicle controller 100 through the vehicle network. The VCU 120 may transmit a vehicle main command such as start, power train control, driving state determination, torque control, voltage control, etc., to a corresponding component.

The first to nth ECUs ECU1 to ECUn may be controllers for respectively controlling various electric and electronic devices (e.g., a camera, an acceleration sensor, a wheel speed sensor, an advanced driver assistance system (ADAS), an autonomous emergency braking (AEB), audio/ video/navigation (AVN), etc.).

The main power unit 200 may include the HV battery 210, a first converter 220, and a low-voltage (LV) battery 230. The HV battery 210 and the LV battery 230 may be referred to as a first battery and a second battery, respectively.

The HV battery 210 may include at least one battery cell that store electric energy for supplying high-voltage (e.g., 400 V to 600 V) power required for driving the vehicle 10. The HV battery 210 may be controlled and monitored by the BMS 110. The HV battery 210 may transmit the high-voltage power to each of the first converter 220 and the emergency controller 310.

The first converter 220 may receive the high-voltage power from the HV battery 210 to convert the same into low-voltage (e.g., 12 V) power and output the same to the LV battery 230, thus charging the LV battery 230. The first converter 220 may be a low-voltage direct-current (DC)/DC converter. Whether the first converter 220 operates or not (i.e., ON/OFF) may be controlled by the VCU 120. Moreover, the first converter 220 may be supplied with power from the LV battery 230 to operate. Moreover, the first converter 220 may use the LV battery 230 as an operating power source.

The LV battery 230 may include at least one battery cell that store electric energy for supplying low-voltage (e.g., 12 V) power required for an operation of the vehicle controller 100. The LV battery 230 may supply low-voltage power to the respective components 110, 120, and ECU1 to ECUn of the vehicle controller 100 to allow each component of the vehicle controller 100 to operate.

When the LV battery 230 is discharged, the respective components 110, 120, and ECU1 to ECUn of the vehicle controller 100 may fail to be supplied with the low-voltage power and thus may not be able to operate normally. In particular, when the VCU 120 fails to be supplied with power, in spite of a start request of a driver (e.g., start button manipulation), the VCU 120 may not be able to process the start request, making it impossible to start the vehicle 10. In this case, charging of the LV battery 230 is required, but the VCU 120 controlling the first converter 220 may not be able to operate, such that charging of the LV battery 230 through the first converter 220 may not be performed.

The emergency power unit 300 may charge the LV battery 230 when the LV battery 230 is discharged or is likely to be discharged. The emergency power unit 300 may include an emergency controller 310, a second converter 320, and a user switch 330.

The emergency controller 310 may control an overall operation of the emergency power unit 300, and may be supplied with high-voltage power from the HV battery 210 to operate. According to an embodiment, the emergency controller 310 may include a converter for converting the high-voltage power of the HV battery 210 into power of a specific voltage required for an operation of the emergency controller 310.

The emergency controller 310 may determine whether charging of the LV battery 230 is required, and control connection between the HV battery 210 and the second converter 320 based on a result of the determination.

When charging of the LV battery 230 is required, the emergency controller 310 may transmit the high-voltage power of the HV battery 210 to the second converter 320 to control the LV battery 230 to be charged.

When charging of the LV battery 230 is not required, the emergency controller 310 may block connection between the HV battery 210 and the second converter 320.

According to an embodiment, upon receiving an emergency charging signal from the user switch 330, the emergency controller 310 may determine that charging of the LV battery 230 is required. The emergency charging signal may be generated by user's manipulation in a situation where the vehicle 10 is not started in a normal manner (e.g., start button manipulation) due to discharging of the LV battery 230.

According to an embodiment, when determining that the LV battery 230 is likely to be discharged, the emergency controller 310 may determine that charging of the LV battery 230 is required. The emergency controller 310 may monitor state data (e.g., an output voltage) of the LV battery 230 every specific periods (e.g., 10 secs), and may determine that charging of the LV battery 230 is required when a state data (e.g., the output voltage) of the LV battery 230 satisfies a predetermined discharging risk condition (e.g., 10 V or less).

The emergency controller 310 may use the HV battery 210 as an operating power source, and thus may monitor the state data of the LV battery 230 at all times even in a start-off state of the vehicle, and may immediately charge the LV battery 230 when the battery 230 is likely to be discharged.

According to an embodiment, when start of the vehicle 10 is in an ON state, charging of the LV battery 230 is likely to be performed normally through the VCU 120 and the first converter 220, such that monitoring and auto-charging of the LV battery 230 by the emergency controller 310 may be activated in the OFF state of the start of the vehicle 10.

Thus, according to the present disclosure, start and a stable operation of the vehicle 10 may be guaranteed by charging the LV battery 230 using an internal power source of the vehicle 10 without supply from an external power source.

The second converter 320 may receive the high-voltage power of the HV battery 210 through the emergency controller 310 to convert the same into low-voltage (e.g., 12 V) power and output the same to the LV battery 230, thus charging the LV battery 230. The second converter 320 may be a low-voltage DC/DC converter. Whether the second converter 320 operates or not (i.e., ON/OFF) may be controlled by the emergency controller 310. Moreover, the second converter 320 may be supplied with power from the HV battery 210 to operate. That is, the second converter 320 may use the HV battery 210 as an operating power source and thus may operate normally regardless of whether the LV battery 230 is discharged.

The user switch 330 may receive input from a user such as a driver, etc., to generate an emergency charging signal and transmit the same to the emergency controller 310. For example, the user switch 330 may be a switch (e.g., a jump start switch) located inside the vehicle 10 (e.g., inside a motor room) to enable user's physical manipulation. When the user manipulates (e.g., presses) the user switch 330, a preset emergency charging signal (e.g., a current signal or a voltage signal) may be generated.

When the vehicle 10 does not include the emergency power unit 300, the vehicle controller 100 may not be supplied with low-voltage power and thus may not be able to process the start request in a discharged state of the LV battery 230, making start of the vehicle impossible. However, the vehicle 10 including the emergency power unit 300 may charge the LV battery 230 using power of the HV battery 210 in a state where the LV battery 230 is discharged or is likely to be discharged, enabling an operation such as normal start, etc.

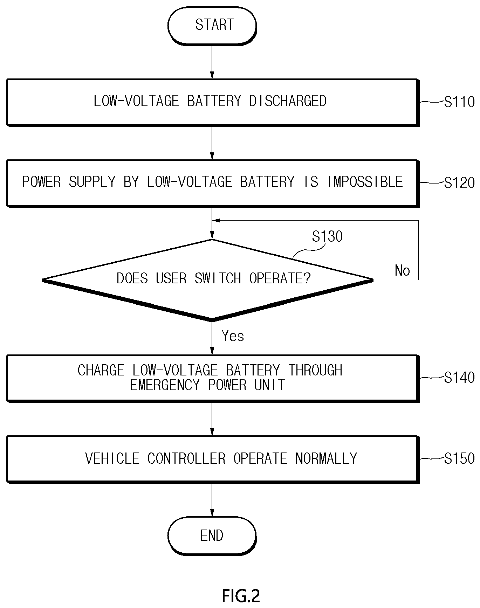

FIG. 2 is a flowchart illustrating an operating method of a vehicle in a discharged state of an LV battery, according to an embodiment of the present disclosure.

Referring to FIG. 2, the LV battery 230 may be fully discharged for various causes (e.g., aging or failure of a battery, a temporary error of the VCU 120 or the first converter 220, etc.), in operation S110.

Due to full discharging of the LV battery 230, the vehicle controller 100 may not be supplied with power from the LV battery 230 and thus may not be able to operate normally, in operation S120. In this case, in spite of a start request of a driver (e.g., start button manipulation), the VCU 120 of the vehicle controller 100 may not be able to process the start request, making it impossible to start the vehicle 10.

The emergency controller 310 may receive power from the HV battery 210 and thus may operate at all times unless the HV battery 210 is fully discharged.

The emergency controller 310 may monitor whether the emergency charging signal is received from the user switch 330, and continuously wait when the emergency charging signal is not received (No in S130).

When the user switch 330 operates and thus the emergency charging signal is received from the user switch 330 (Yes in S130), the emergency controller 310 may determine that charging of the LV battery 230 is required, and transmit the high-voltage power of the HV battery 210 to the second converter 320 based on a result of the determination to control the LV battery 230 to be charged, in operation S140.

As the LV battery 230 is charged, the vehicle controller 100 may be supplied with power from the LV battery 230 and thus may be able to operate normally, in operation S150. As a result, when a start request of a driver (e.g., start button manipulation) is generated, the VCU 120 of the vehicle controller 100 may process the start request, enabling start of the vehicle 10.

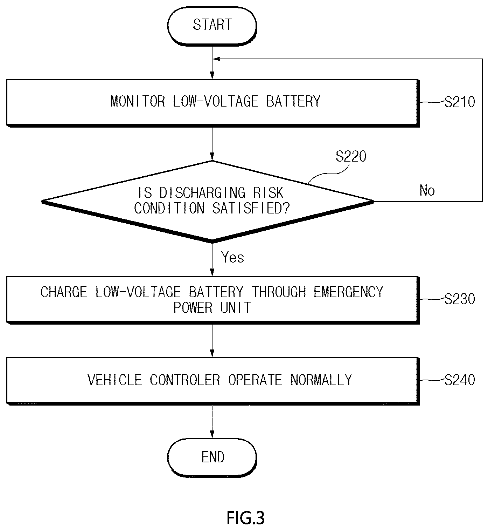

FIG. 3 is a flowchart illustrating an operating method of a vehicle when an LV battery is likely to be discharged, according to another embodiment of the present disclosure.

Referring to FIG. 3, the emergency controller 310 may monitor state data (e.g., an output voltage) of the LV battery 230 every specific periods (e.g., 10 secs) in operation S210. Herein, monitoring may mean an operation of collecting state data for determining a predetermined discharging risk condition.

The emergency controller 310 may determine based on the collected state data (e.g., the output voltage) whether the discharging risk condition is satisfied, in operation S220. For example, the discharging risk condition may be a condition that the output voltage of the LV battery 230 is kept at a predetermined voltage level (e.g., 10 V) or less for a predetermined time (e.g., 5 secs) or longer.

When the discharging risk condition is not satisfied (No in operation S220), operation S210 may be performed again.

When the discharging risk condition is satisfied (Yes in S220), the emergency controller 310 may determine that charging of the LV battery 230 is required, and transmit the high-voltage power of the HV battery 210 to the second converter 320 based on a result of the determination to control the LV battery 230 to be charged, in operation S230.

As the LV battery 230 is charged, full discharging of the LV battery 230 may be prevented and the vehicle controller 100 may be supplied with power from the LV battery 230 and thus may be able to operate normally, in operation S240. As a result, when a start request of a driver (e.g., start button manipulation) is generated, the VCU 120 of the vehicle controller 100 may process the start request, enabling start of the vehicle 10.

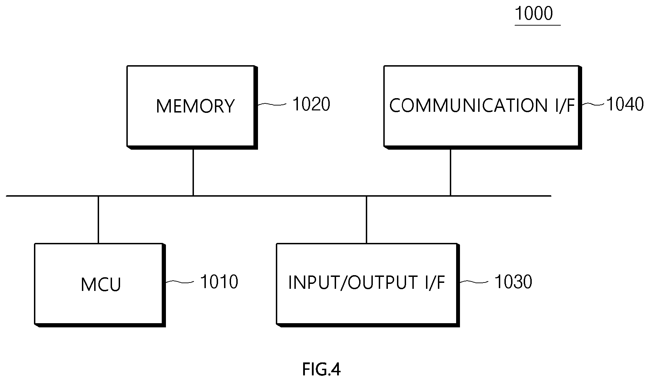

FIG. 4 is a block diagram showing a hardware configuration of a computing system for performing an operating method of a system, according to an embodiment of the present disclosure.

Referring to FIG. 4, a computing system 1000 according to an embodiment disclosed herein may include a microcontroller unit (MCU) 1010, a memory 1020, an input/output interface (I/F) 1030, and a communication I/F 1040.

According to an embodiment, the computing system 1000 may be a system for performing an operation of each component (e.g., the BMS 110, the emergency controller 310, etc., hereinafter, referred to as a 'corresponding device') of the above-described vehicle 10.

The MCU 1020 may be a processor that executes various programs stored in the memory 1020.

For example, the MCU 1020 may be a processor for processing various data and/or signals required for performing the operation of main power unit 200.

The memory 1020 may store various programs and/or data required for managing and controlling the corresponding device. The memory 1020 may be provided in plural, depending on a need.

The memory 1020 may be volatile memory or non-volatile memory. For the memory 1020 as the volatile memory, random access memory (RAM), dynamic RAM (DRAM), static RAM (SRAM), etc., may be used. For the memory 1020 as the nonvolatile memory, read only memory (ROM), programmable ROM (PROM), electrically alterable ROM (EAROM), erasable PROM (EPROM), electrically erasable PROM (EEPROM), flash memory, etc., may be used. The above-listed examples of the memory 1020 are merely examples and are not limited thereto.

The input/output I/F 1030 may provide an interface for transmitting and receiving data by connecting an input device (not shown) such as a keyboard, a mouse, a touch panel, etc., and an output device such as a display (not shown), etc., to the MCU 1010.

The communication I/F 1040, which is a component capable of transmitting and receiving various data to and from external components including a server, may be various devices capable of supporting wired or wireless communication.

As such, a computer program according to an embodiment disclosed herein may be recorded in the memory 1020 and executed and processed by the MCU 1010, thus being implemented as a module that performs functions shown in FIGS. 1 to 3.

The above description is merely illustrative of the technical idea of the present disclosure, and various modifications and variations will be possible without departing from the essential characteristics of embodiments of the present disclosure by those of ordinary skill in the art to which the embodiments disclosed herein pertains.

Therefore, the embodiments disclosed herein are intended for description rather than limitation of the technical spirit of the embodiments disclosed herein and the scope of the technical spirit of the present disclosure is not limited by these embodiments disclosed herein. The protection scope of the technical spirit disclosed herein should be interpreted by the following claims, and all technical spirits within the same range should be understood to be included in the range of the present disclosure.

## Claims

1. A vehicle comprising:
a first battery configured to store power for driving the vehicle;
a second battery configured to store power for an operation of a vehicle controller configured to control at least one electronic device of the vehicle;
a first converter configured to convert power output from the first battery, supply the converted power to the second battery and use the second battery as an operating power source;
a second converter configured to convert the power output from the first battery, supply the converted power to the second battery and use the first battery as an operating power source; and
an emergency controller configured to control connection between the first battery and the second battery.

2. The vehicle of claim 1, wherein the emergency controller is further configured to use the first battery as an operating power source.

3. The vehicle of claim 1, further comprising a user switch configured to generate an emergency charging signal according to an input of a user.

4. The vehicle of claim 3, wherein the emergency controller is further configured to connect the first battery to the second converter to charge the second battery with the power of the first battery, upon receiving the emergency charging signal.

5. The vehicle of claim 3, wherein the user switch is located inside a motor room of the vehicle.

6. The vehicle of claim 1, wherein the emergency controller is further configured to collect state data regarding the second battery.

7. The vehicle of claim 6, wherein the emergency controller is further configured to determine, based on the state data regarding the second battery, whether charging of the second battery is required.

8. The vehicle of claim 7, wherein the emergency controller is further configured to determine that charging of the second battery is required, when an output voltage of the second battery is kept at a predetermined voltage level or less for a predetermined time.

9. The vehicle of claim 1, wherein a voltage of the power stored in the first battery is higher than a voltage of the power stored in the second battery.

10. The vehicle of claim 1, wherein the voltage of the power stored in the second battery is 12 V.

11. The vehicle of claim 1, wherein the vehicle controller comprises a vehicle control unit VCU configured to control start of the vehicle.

12. The vehicle of claim 1, wherein the VCU is further configured to be supplied with the power from the second battery to control an operation of the first converter.

13. An operating method of a vehicle, the operating method comprising:
generating an emergency charging signal according to an input of a user through a user switch;
charging, with power of a first battery that stores the power for driving the vehicle, a second battery that stores power of a voltage lower than a voltage of the power of the first battery; and
supplying, by the second battery, the power to a vehicle controller that controls at least one electronic device of the vehicle.

14. An operating method of a vehicle, the operating method comprising:
collecting state data regarding a second battery that stores power of a voltage lower than a voltage of the power of a first battery that stores power for driving the vehicle;
determining, based on the state data regarding the second battery, whether charging of the second battery is required;
charging the second battery with the power of the first battery, when charging of the second battery is required; and
supplying, by the second battery, the power to a vehicle controller that controls at least one electronic device of the vehicle.
